(19) Europäisches Patentamt
European Patent Office
Office européen des brevets

(11) Numéro de publication: **0 104 299**
**B1**

(12) **FASCICULE DE BREVET EUROPEEN**

(45) Date de publication du fascicule du brevet:
07.01.88

(51) Int. Cl.⁴: **H 02 M 7/48**, H 02 M 7/527

(21) Numéro de dépôt: **82870048.4**

(22) Date de dépôt: **22.09.82**

(54) Procédé de commande d'un onduleur travaillant en modulation de largeur d'impulsion et dispositif appliquant ce procédé.

(43) Date de publication de la demande:
04.04.84 Bulletin 84/14

(45) Mention de la délivrance du brevet:
07.01.88 Bulletin 88/1

(84) Etats contractants désignés:
AT BE CH DE FR GB IT LI LU NL SE

(56) Doouments cités:
CH - A - 489 945
DE - B - 2 423 718
GB - A - 1 190 847

SIEMENS-ZEITSCHRIFT, vol. 45, no. 3, 1971, H. HEINTZE et al., "Pulswechselrichter zur Drehzahlsteuerung von Asynchronmaschinen", pages 154-161

(73) Titulaire: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Detemmerman, Bernard, Rue Allard Cambier 4, B-6158 Pieton (BE)**
Inventeur: **Lataire, Philippe, Streekbaan 174, 1800 Vilvorde (BE)**

EP 0 104 299 B1

## Description

Lorsqu'un onduleur travaille en modulation de largeur d'impulsions pour alimenter une charge alternative à une fréquence fondamentale donnée, les dispositifs qui commandent les circuits d'impulsions des semi-conducteurs de l'onduleur sont de réalisation complexe. Les impulsions de commande, modulées en largeur, peuvent être obtenues par comparaison entre un ou des signaux sinusoïdaux à la fréquence fondamentale et un ou des signaux de forme triangulaire et de fréquence beaucoup plus élevée. Dans le cas d'un système triphasé, ces impulsions sont, dans les réalisations classiques, obtenues à l'aide de trois comparateurs au moins.

Par ailleurs, les impulsions de commande sont généralement à haute fréquence de manière à reporter les harmoniques de tension à des rangs suffisamment élevés. En particulier dans le cas d'une commande de moteur asynchrone, ces signaux haute fréquence réduisent considérablement les couples pulsants aux basses vitesses qui fatiguent les transmissions mécaniques. Indépendamment de la difficulté d'obtenir un ou des signaux sinusoïdaux à la fréquence fondamentale, variables en amplitude et en fréquence, il faut encore souligner que l'usage de trois comparateurs dégrade, par leur différence de comportement, les signaux de sortie.

Le procédé de commande de l'onduleur et le dispositif revendiqués contournent la difficulté de réaliser une ou des sinusoïdes variable en amplitude et en fréquence, réduisent le nombre de composants utilisés dans le circuit de commande, simplifient celui-ci et fournissent des signaux de commande de grande précision.

Le dispositif de commande peut, dans le cas d'un moteur asynchrone utiliser un seul comparateur dont la dérive éventuelle n'affecte pas les tensions entre phases de la charge. Le dispositif de commande revendiqué comporte, dans la réalisation donnée à titre d'exemple, un comparateur recevant un premier signal sinusoïdal, haute fréquence, appelé signal de référence. Ce signal de référence est obtenu, dans une première branche du circuit, au départ d'une horloge donnant un signal carré à très haute fréquence. Dans cette première branche du circuit, le signal de l'horloge est successivement divisé par plusieurs diviseurs binaires, réglé en amplitude puis filtré.

Le comparateur unique de l'exemple de réalisation reçoit un second signal, appelé signal de découpage, engendré dans une seconde branche du circuit par un générateur d'ondes triangulaires à une fréquence compatible avec la fréquence de commutation des éléments constitutifs de l'onduleur.

Dans une troisième branche du circuit un générateur d'ondes rectangulaires engendre un signal à une fréquence multiple de la fréquence fondamentale. Ce signal appelé signal fondamental est tout d'abord synchronisé sur le signal d'horloge pour que des flancs des deux signaux ne soient jamais en coïncidence. Ces deux signaux, le signal d'horloge et le signal fondamental, ainsi synchronisés sont traités afin d'obtenir un troisième signal comprenant autant de flancs par unité de temps que la somme du nombre de flancs des deux signaux précités. Ce troisième signal est ensuite divisé en fréquence puis réparti en plusieurs signaux déphasés. Ces signaux déphasés constituent le signal d'échantillonnage.

En comparant le signal de référence et le signal de découpage on obtient, à la sortie du comparateur un signal haché complexe introduit simultanément dans des unités d'échantillonnage, au nombre de trois dans la réalisation donnée à titre d'exemple. Ces unités d'échantillonnage sont commandées par les signaux déphasés d'échantillonnage pour obtenir des impulsions modulées en largeur. Pour éviter que les impulsions modulées en largeur présentent des transitions multiples, chaque unité d'échantillonnage est suivie d'un correcteur qui fournit un signal de grande netteté.

Dans le but d'obtenir une précision suffisante, de l'ordre de 1%, dans la forme des impulsions modulées en largeur, pour une onde fondamentale de l'ordre de 50 Hz et un signal de découpage de l'ordre de 1 KHz, la fréquence choisie pour le signal d'échantillonnage est de l'ordre de 100 Khz. De même pour reconstituer la sinusoïde de référence avec la même précision, la fréquence choisie pour le signal d'horloge est de l'ordre de 10 MHz.

L'invention est expliquée plus en détails à l'aide des figures suivantes.

La figure 1 est une vue d'ensemble d'une installation utilisant ce dispositif de commande.

La figure 2 est un schéma de principe du dispositif de commande pour obtenir de façon classique des impulsions de largeur modulée. Sur cette même figure sont également représentées les sinusoïdes de référence, le signal triangulaire de découpage et les impulsions à largeur modulée dans les trois phases.

La figure 3 est le schéma de principe du dispositif de commande revendiqué.

Les figures 4, 5, 6 et 7 montrent certains détails du traitement des signaux dans le dispositif de commande revendiqué.

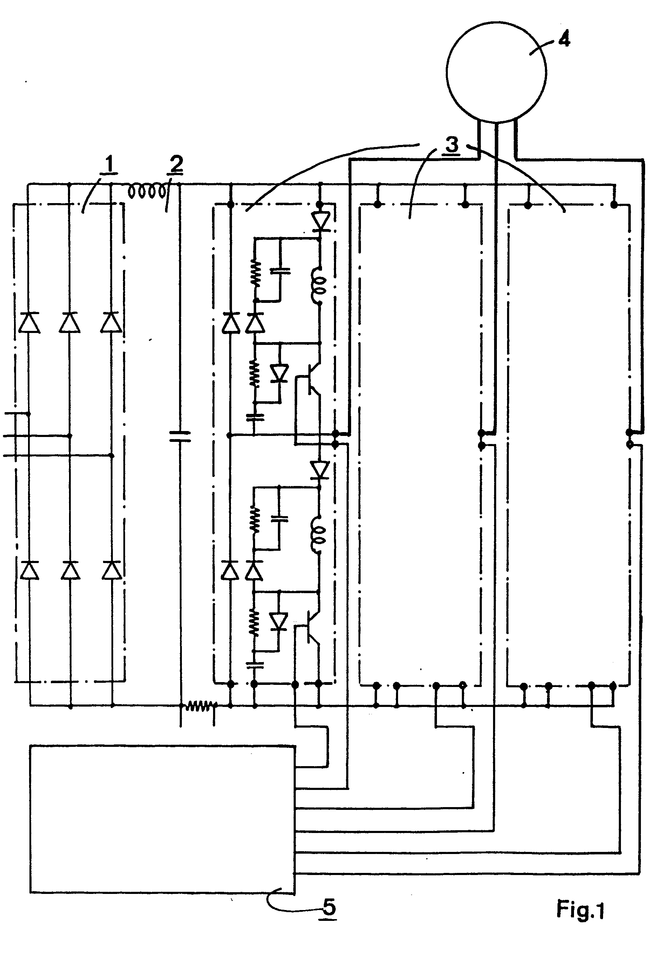

La figure 1 montre un redresseur 1 raccordé par l'intermédiaire d'un filtre 2 à un onduleur 3 commandant une machine asynchrone triphasée 4. L'onduleur 3 est commandé par un dispositif de commande 5 qui sera détaillé ultérieurement.

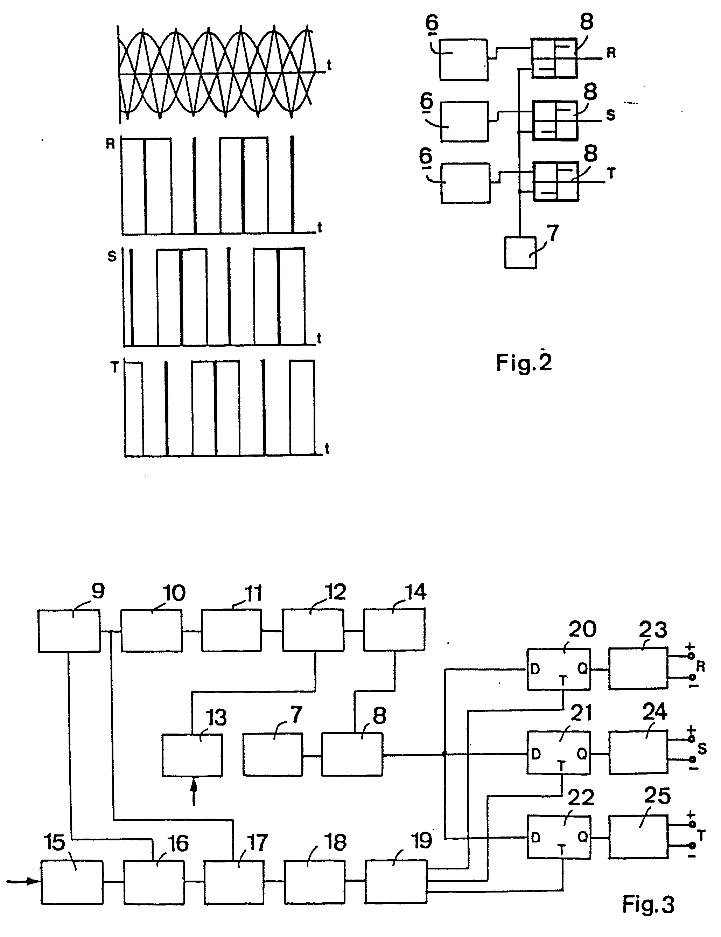

La figure 2 montre le schéma de principe d'un dispositif de commande classique utilisant trois générateurs d'ondes sinusoïdales 6 à fréquence et à amplitude variables, un générateur d'ondes triangulaires 7 et trois comparateurs 8 fournissant les ondes modulées en largeur respectivement dans les trois phases R, S, T.

La figure 3 représente le schéma du dispositif de commande revendiqué.

Dans cet exemple de réalisation, la branche médiane du circuit comprend un générateur d'ondes triangulaires 7, qui fournit des impulsions de forme triangulaire, d'amplitude constante et de fréquence éventuellement variable appelées signaux de découpage.

Un comparateur 8 reçoit à une première entrée, les signaux de découpage engendrés par le générateur 7.

Dans la branche supérieure du schéma, on trouve une horloge 9 fournissant un signal carré à haute fréquence, de l'ordre de 10 MHz, d'amplitude et de fréquence constantes. Dans l'exemple de réalisation présenté en figure 3, ce signal est ensuite divisé par 16 à l'aide d'un diviseur binaire 10 puis divisé par 6 à l'aide d'un diviseur binaire 11. Le signal d'horloge, ainsi divisé par 96, est modifié en amplitude dans une unité de réglage de l'amplitude 12 à l'aide d'un générateur de consigne d'amplitude 13. Le signal d'horloge divisé et réglé en amplitude est ensuite introduit dans un filtre 14 pour être converti en un signal sinusoïdal de fréquence, de l'ordre de 100 KHz, appelé signal de référence.

Le signal de référence est alors introduit dans le comparateur 8 pour être comparé au signal de découpage fournit par le générateur d'ondes triangulaires 7.

Dans la branche inférieure du schéma, on trouve un générateur 15 émettant un signal à une fréquence multiple de la fréquence fondamentale désirée appelé signal fondamental. Ce signal fondamental variable jusqu'à 5000 Hz dans l'exemple de réalisation en figure 3, est introduit dans une unité de synchronisateur 16 pour être synchronisé sur le signal d'horloge.

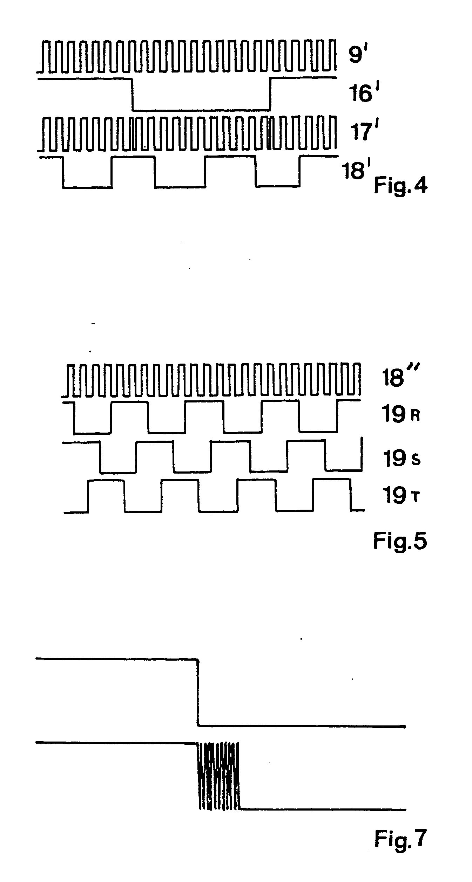

La figure 4 montre le traitement des signaux dans l'unité de synchronisation 16. Le train d'ondes, repéré 9', représente le signal de l'horloge 9. Le train d'ondes, repéré 16', représente le signal à la fréquence d'un multiple de la fréquence fondamentale au sortir de l'unité de synchronisation 16 dont le rôle est d'éviter que les flancs d'impulsions des trains d'ondes 9' et 16' coïncident.

Le signal fondamental synchronisé sortant de l'unité de synchronisation 16 en figure 3 est introduit dans l'élément additionneur d'impulsions 17 qui fait la somme du signal d'horloge 9' et du signal fondamental synchronisé 16'.

Le résultat obtenu après sommation en l'élément additonneur d'impulsions 17 est représenté en figure 4 par le train d'ondes repéré 17'.

La somme de trains d'ondes 17' est ensuite divisé par un diviseur binaire 18 en figure 3.

En figure 4, à titre d'exemple, le train d'ondes repéré 17' est transformé après division par quatre en le train d'ondes repéré 18' où les variations de la durée des périodes sont fortement atténuées après division.

Au sortir du diviseur binaire 18 en figure 3 le signal est à nouveau divisé par 6 dans un diviseur binaire 19 qui simultanément répartit à la sortie, trois signaux déphasés de 120° appelés signaux d'échantillonnage.

La figure 5 donne l'exemple d'un signal à la sortie du diviseur binaire 18, pris à une autre échelle de temps et repéré 18'', et les trois trains d'ondes obtenus à la sortie du diviseur binaire 19 repérés respectivement 19R, 19S, 19T et constituant chacun un signal d'échantillonnage.

Après comparaison de l'onde sinusoïdale, faisant office de signal de référence, et de l'onde triangulaire, faisont office de signal de découpage, dans le comparateur 8, en figure 3 on obtient un signal haché complexe qui est introduit dans des unités d'échantillonnage 20, 21, 22 respectivement affectées à la commande R, S, T de l'onduleur.

Dans l'exemple de réalisation, ces unités d'échantillonnage 20, 21, 22 sont des bistables à commande par flancs dans lesquels la sortie Q reproduit l'entrée D au moment d'un passage du bas vers le haut du signal introduit en T.

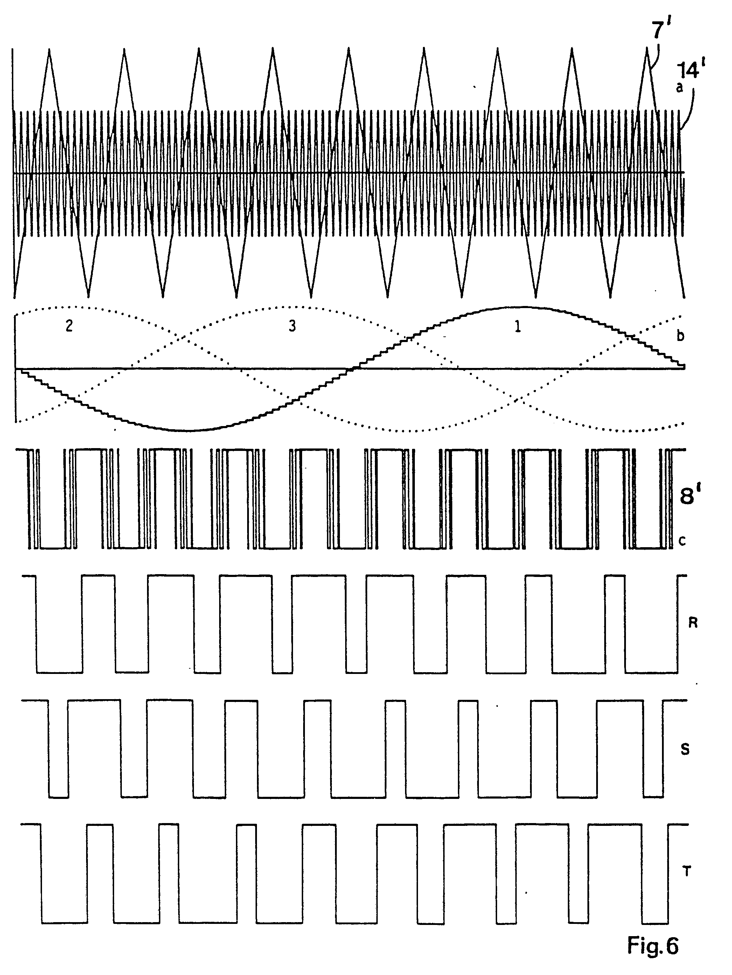

La figure 6 donne un exemple du traitement des signaux dans le comparateur 8 et dans chacune des unités d'échantillonnage 20, 21, 22.

Sur le diagramme a, la sinusoïde haute fréquence faisant office de signal de référence est repérée en 14'. L'onde triangulaire faisant office de signal de découpage est repérée en 7'.

Sur le diagramme c de la figure 6, le signal haché complexe obtenu à la sortie du comparateur 8 est repéré 8'.

La figure 6 fait encore apparaître sur le diagramme b, trois sinusoïdes à basse fréquence, déphasées de 120° l'une par rapport à l'autre. Ces sinusoïdes sont, dans le procédé classique, comparées, à l'aide de trois comparateurs au signal triangulaire, représenté en 7' sur le diagramme a, pour obtenir les impulsions à largeur modulée dans les trois phases et repérées dans la figure 6 par R, S, T.

Par contre dans le procédé revendiqué, la comparaison du signal sinusoïdal haute fréquence 14' au signal de découpage 7' effectuée dans le seul comparateur analogique 8 en figure 3 engendre un train d'ondes complexes 8' qui par échantillonnage à l'aide des bistables à commande par flancs 20, 21, 22 fournit les ondes modulées en largeur reprises en R, S, T dans la figure 6.

Il est à remarquer que les sinusoïdes 1, 2 et 3 de la figure 6b n'apparaissent nulle part dans le schéma du dispositif de commande représenté en figure 3.

La représentation de ces sinusoïdes aide seulement à la compréhension du dispositif proposé en référence à des générateurs classiques.

Pour éviter que les impulsions modulées en largeur présentent des transitions multiples, chaque unité d'échantillonnage 20, 21, 22 est suivie d'un correcteur 23, 24, 25 pour fournir un signal de grande netteté respectivement dans les phases R, S, T. L'action d'un des correcteurs tel que 23, 24 ou 25 est montrée en figure 7 où apparaissent un flanc net et un flanc à transitions multiples.

Dans d'autres réalisations, on peut, selon les besoins d'application, utiliser d'autres multiples de la fréquence fondamentale, diviser différemment ce signal d'horloge, engager l'addition du signal d'horloge et du multiple de la fréquence fondamentale à un autre niveau de l'opération de division du signal d'horloge...

Dans le schéma du dispositif de commande donné à titre d'exemple en figure 3, la fréquence multiple de l'onde fondamentale et la fréquence de découpage sont tout à fait indépendantes et permettent d'obtenir une commande asynchrone de l'onduleur équipé, dans la plupart des cas, de transistors.

Si les semi-conducteurs de l'onduleur sont des thyristors, dont la vitesse de commutation est plus faible que celle des transistors, on réalise un dispositif de commande synchrone en assurant des liaisons entre le générateur d'ondes triangulaires 7, et le générateur 15 émettant le signal multiple de l'onde fondamentale d'une part et entre le générateur d'ondes triangulaires 7 et les diviseurs binaires 10, 11, 12, 18, 19 et l'élément additionneur d'impulsions 17 d'autre part. On peut aussi en complémentarité du comparateur 8 recevant toujours un signal de découpage de forme triangulaire, utiliser un ou plusieurs comparateurs supplémentaires recevant chacun un signal de forme appropriée tel que le signal de dents de scie ou un signal à niveau constant.

**Revendications**

1. Procédé pour la commande d'un onduleur (3) travaillant en modulation de largeur d'impulsions et alimentant une charge alternative (4) à une fréquence fondamentale f éventuellement variable, caractérisé en ce que les impulsions modulées en largeur sont obtenues par comparaison d'un signal sinusoïdal, appelé signal de référence (14'), de haute fréquence par rapport à la fréquence des impulsions de modulation, avec un signal de forme approximativement triangulaire, appelé signal de découpage (7'), d'une fréquence compatible avec la fréquence de commutation des éléments constitutifs de l'onduleur dans un comparateur analogique (8) suivie d'un échantillonnage d'un signal haché complexe (8') obtenu à la sortie du comparateur (8) et transmis à une ou plusieurs unités d'échantillonnage (20, 21, 22) correspondant à la ou aux phases raccordées à l'onduleur (3) et commandées chacune par un signal d'échantillonnage issu d'un signal à une fréquence multiple de la fréquence fondamentale f, appelé signal fondamental, synchronisé avec le signal fabriqué dans la branche du circuit fournissant le signal de référence (14').

2. Dispositif de commande (5) pour exécuter le procédé selon la revendication 1, caractérisé en ce que le comparateur (8), recevant le premier signal sinusoïdal, appelé signal de référence, a une première entrée reliée à une branche du circuit dans laquelle un signal d'horloge, à haute fréquence par rapport à la fréquence des impulsions de modulation, est généré par une horloge (9) puis traité par un ou plusieurs diviseurs binaires (10, 11), par une unité de réglage d'amplitude (12) et par un filtre (14), en ce que le second signal, appelé signal de découpage, introduit dans le comparateur (8), est engendré par un générateur d'ondes triangulaires (7) de fréquence compatible avec la fréquence de commutation des éléments constitutifs de l'onduleur (3), en ce qu'une onde rectangulaire, d'une fréquence multiple de la fréquence fondamentale f, appelée signal fondamental est engendrée par un générateur (15) puis successivement synchronisée sur le signal de l'horloge en l'unité de synchronisation (16) et additionnée à celui-ci en l'élément additionneur d'impulsions (17) de manière à obtenir un nouveau signal dont la fréquence est égale à la somme des fréquences du signal fondamental et du signal d'horloge, ce nouveau signal étant divisé par un ou plusieurs diviseurs binaires (18 et 19) pour produire après répartition dans le diviseur binaire (19) plusieurs signaux déphasés entre eux du déphasage requis et appelés chacun signal d'échantillonnage, en ce que, pour chaque phase, le signal d'échantillonnage déclenche dans chaque unité d'échantillonnage (20, 21 ou 22) l'instant où la configuration du signal haché complexe à l'entrée de l'unité de l'échantillonnage est transmis à la sortie de celui-ci-

3. Dispositif de commande selon la revendication 2, caractérisé en ce que dans chaque phase un correcteur est disposé à la sortie de l'unité d'échantillonnage.

4. Dispositif de commande selon les revendications 2 ou 3, caractérisé en ce qu'un ou plusieurs comparateurs supplémentaires ont chacun une première entrée recevant le même signal de référence que le premier comparateur du dispositif et ont chacun une sortie branchée sur les unités d'échantillonnage semblables ou identiques à celles connectées au premier comparateur du dispositif, en ce que le ou les comparateurs supplémentaires ont une seconde entrée reliée chacune à un générateur supplémentaire donnant un signal de découpage différent ou tout autre signal de comparaison approprié, en ce que les comparateurs sont commandés par un sélecteur tenant compte du signal fondamental utilisé.

5. Dispositif de commande selon une des revendications 2 à 4, caractérisé en ce que le ou les générateurs de signal de découpage et des autres signaux de comparaison sont reliés d'une part au générateur de signal fondamental et d'autre part aux différents diviseurs binaires et à l'élément de réglage en amplitude.

**Claims**

1. Control method for an inverter (3) working with pulse width modulation and supplying an alternating load (4) with a possibly variable fundamental frequency f, characterised in that the width modulated pulses are obtained by comparison of a sinusoidal signal, called the reference signal (14'), of high frequency relatively to the frequency of the modulation pulses, with a signal of approximately triangular form, called the chopping signal (7'), of a frequency compatible with the switching frequency of the component elements of the inverter in an analog comparator (8) followed by a sampling of a complex chopped signal (8') obtained at the output of the comparator (8) and transmitted to one or more sampling units (20, 21, 22) corresponding to the phase or phases connected with the inverter (3) and each controlled by a sampling signal emanating from a signal with a multiple frequency of the fundamental frequency f, called the fundamental signal, synchronised with the signal produced in the branch of the circuit providing the reference signal (14').

2. Control apparatus (5) for carrying out the method according to claim 1, characterised in that the comparator (8), receiving the first sinusoidal signal, called the reference signal, has a first input connected to a branch of the circuit wherein a clock signal, with a high frequency relatively to the frequency of the modulation pulses, is generated by a clock (9) then treated by one or more binary dividers (10, 11), by an amplitude regulation unit (12) and by a filter (14), in that the second signal, called the chopping signal, introduced into the comparator (8), is generated by a generator (7) of triangular waves of a frequency compatible with the switching frequency of the component elements of the inverter (3), in that a square wave, of a frequency which is a multiple of the fundamental frequency f, called the fundamental signal, is generated by a generator (15) then successively synchronised on the clock signal in the synchronisation unit (16) and added to this signal in the puls adder (17) so as to obtain a new signal whereof the frequency is equal to the sum of the frequencies of the fundamental signal and clock signal, this new signal being divided by one or more binary dividers (18 and 19) to produce after distribution in the binary divider (19) a plurality of signals dephased from one another by the requisite amount of dephasing and each called a sampling signal, in that, for each phase, the sampling signal triggers in each sampling unit (20, 21 or 22) the instant when the configuration of the complex chopped signal at the input of the sampling unit is transmitted to the output of the latter.

3. Control apparatus according to claim 2, characterised in that in each phase a corrector is arranged at the output of the sampling unit.

4. Control apparatus according to claim 2 or 3, characterised in that one or more supplementary comparators each have a first input receiving the same reference signal as the first comparator of the apparatus and each have an output connected to the sampling units similar or identical to those connected to the first comparator of the apparatus, in that the supplementary comparator or comparators has/have a second input connected each to a supplementary generator giving a different chopping signal or any other suitable comparison signal, in that the comparators are controlled by a selector taking into account the fundamental signal used.

5. Control apparatus according to one of claims 2 to 4, characterised in that the generator or generators of the chopping signal and other comparison signals are connected on the one hand to the fundamental signal generator and on the other hand to the various binary dividers and to the amplitude regulation element.

**Patentansprüche**

1. Verfahren zur Steuerung eines Wechselrichters (3), der mit Pulsbreitenmodulation arbeitet und eine Wechselstromlast (4) mit einer eventuell variablen Grundfrequenz f versorgt, dadurch gekennzeichnet, dass die hinsichtlich der Breite modulierten Impulse erhalten werden durch Vergleich zwischen einem sinusförmigen Signal mit hoher Frequenz gegenüber der Frequenz der Modulationsimpulse, das Bezugssignal (14') genannt wird, und einem ungefähr dreieckförmigen Signal mit einer Frequenz, die mit der Schaltfrequenz der Bauelemente des Wechselrichters kompatibel ist, das Zerhackersignal (7') genannt wird, in einem analogen Komparator (8), und anschliessende Abtastung eines komplexen zerhackten Signals (8'), das am Ausgang des Komparators (8) erhalten wird und auf eine oder mehrere Abtasteinheiten (20, 21, 22) gegeben wird, die der oder den an den Wechselrichter (3) angeschlossenen Phasen entsprechen, und von denen jede durch ein Abtastsignal gesteuert wird, das aus einem Signal hervorgegangen ist, dessen Frequenz ein Vielfaches der Grundfrequenz f ist, und das Grundsignal genannt wird, und das mit dem Signal synchronisiert wurde, das in dem Abschnitt der Schaltung erzeugt wurde, der das Bezugssignal (14') liefert.

2. Steuervorrichtung (5) zur Verwirklichung des Verfahrens gemäss Anspruch 1, dadurch gekennzeichnet, dass der Komparator (8), auf den das erste, Bezugssignal genannte, sinusförmige Signal gegeben wird, einen ersten Eingang aufweist, der mit einem Abschnitt der Schaltung verbunden ist, in dem ein Zeitgebersignal mit hoher Frequenz gegenüber der Frequenz der Modulationsimpulse von einem Zeitgeber (9) erzeugt wird und dann von einem oder mehreren binären Teilern (10, 11), einer Amplitudeneinstelleinheit (12) und einem Filter (14) verarbeitet wird, dass das zweite, auf den Komparator (8) gegebene, Zerbakkersignal genannte Signal von einem Dreieckwellengenerator (7) erzeugt wird, dessen Frequenz mit der Schaltfrequenz der Bauelemente des Wechselrichters (3) kompatibel ist, dass eine rechteckförmige Welle, deren Frequenz ein Vielfaches der Grundfrequenz f ist, und die Grundsignal genannt wird, von einem Generator (15) erzeugt wird, danach nacheinander in der Synchronisationseinheit (16) bezüglich des Zeitgebersignals synchronisiert wird und in dem Impuls-Summierer (17) zu diesem Zeitgebersignal addiert wird, so dass ein neues Signal erhalten wird, dessen Frequenz gleich der Summe der Frequenzen des Grundsignals und des Zeitgebersignals ist, wobei dieses neue Signal mit Hilfe eines oder mehrerer binärer Teiler (18 und 19) geteilt wird, und nach Aufteilung in dem binären Teiler (19) mehrere untereinander um den erforderlichen Phasenwinkel phasenverschobene Signale erhalten werden, die Abtastsignale genannt werden, und dass bei jeder Phase das Abtastsignal in jeder Abtasteinheit (20, 21 oder 22) den Augenblick bestimmt, in dem die Konfiguration des komplexen zerhackten Signals am Eingang der Abtasteinheit zu dem Ausgang dieser Abtasteinheit weitergeleitet wird.

3. Steuervorrichtung nach Anspruch 2, dadurch gekennzeichnet, dass bei jeder Phase am Ausgang der Abtasteinheit ein Impulskorrektor angeordnet ist.

4. Steuervorrichtung gemäss Anspruch 2 oder 3, dadurch gekennzeichnet, dass einer oder mehrere zusätzliche Komparatoren je einen ersten Eingang aufweisen, auf den das gleiche Bezugssignal wie bei dem ersten Komparator der Vorrichtung gegeben wird, und je einen Ausgang aufweisen, der mit ähnlichen oder gleichen Abtasteinheiten wie bei dem ersten Komparator der Vorrichtung verbunden ist, dass der oder die zusätzlichen Komparatoren einen zweiten Eingang aufweisen, der jeweils mit einem zusätzlichen Komparator verbunden ist, der ein verschiedenes Zerhackersignal oder ein anderes geeignetes Vergleichssignal liefert, und dass die Komparatoren über einen Wähler gesteuert werden, der das verwendete Grundsignal berücksichtigt.

5. Steuervorrichtung gemäss einem der Ansprüche 2 bis 4, dadurch gekennzeichnet, dass der oder die Generatoren für das Zerhackersignal und die anderen Vergleichssignale einerseits mit dem Generator für das Grundsignal, und andererseits mit den verschiedenen binären Teilern und dem Amplituden-Einstellelement verbunden sind.

Fig.1

Fig. 2

Fig. 3

9'
16'
17'
18'  Fig. 4

18"
19 R
19 S
19 T

Fig. 5

Fig. 7

Fig. 6